# EUROPEAN PATENT APPLICATION

(11) **EP 2 887 228 A1**
(43) Date of publication of application: **24.06.2015**
(21) Application number: 12891337.3
(22) Date of filing: 16.08.2012
(51) Int. Cl.: G06F 17/21

(54) **ELECTRONIC DOCUMENT GENERATION DEVICE AND ELECTRONIC DOCUMENT GENERATION PROGRAM**

(71) Applicant: WingArc1st Inc., Tokyo (JP)
(72) Inventor: TANAKA, Jun, Tokyo 150-0031 (JP); SHIMAZAWA, Ko, Tokyo 150-0031 (JP); TATEHARA, Keisuke, Tokyo 150-0031 (JP); YOSHIHARA, Kosuke, Tokyo 150-0031 (JP)
(74) Representative: Vossius & Partner Patentanwälte Rechtsanwälte mbB
(86) International application number: PCT/JP2012/070795
(87) International publication number: WO 2014/027411

(57) **Abstract**

The present invention incorporates both a program and data into an electronic document in a state in which the program can be executed by using the data, thereby generating an electronic document having a program. According to the present invention having the structure described above, in the case in which the program is to be executed to process the data from various viewpoints and the respective processing results are to be presented as electronic documents, it is not necessary to generate an electronic document in a state in which all of the respective processing results are output in advance. Consequently, it is possible to prevent an increase in the number of pages of the electronic document. Moreover, it is not necessary to re-create an electronic document in order to include lacking processing result afterwards.

## Description

### TECHNICAL FIELD

The present invention relates to an electronic document generation device and an electronic document generation program and more particularly to a technique for generating an electronic document including a processing result (visualized information) obtained by execution of a program.

### BACKGROUND ART

Conventionally, there is offered a technique for enabling generation of various documents, for example, word processing software, text editor and the like as electronic data (hereinafter referred to as an electronic document). Herein, the electronic document includes, as an example, a file format referred to as PDF (Portable Document Format) developed by Adobe Systems Incorporated.

An electronic document of a PDF file has a feature that contents of the document can be displayed in almost the same state in all environments without depending on a specific computer environment. With use of this feature, an electronic document in a specific file format created in word processing software, spreadsheet software, graphic preparing software or the like to be operated depending on a computer environment is converted into a PDF file format. Consequently, the electronic document can be read in all of the computer environments.

There is proposed a technique for carrying out incorporation of data in another format into a PDF file as well as simple conversion of an original electronic document into the PDF file (for example, see Patent Documents 1 and 2). Referring to the technique described in the Patent Document 1, text data converted by an OCR device is embedded to create a PDF file in a predetermined area of PDF data. Referring to the technique described in the Patent Document 2, moreover, a moving image file can be incorporated into a PDF file.

Furthermore, there is also proposed a technique for embedding a program in an electronic document which is not a PDF file (for example, see Patent Document 3). Referring to the technique described in the Patent Document 3, there is generated a document file in an object configuration capable of integrating and executing object programs for carrying out a data operation for a document. Even if a computer receiving the document does not have a suitable application for the document, consequently, a data operation for the document can be carried out by execution of the object program embedded in the document.

Patent Document 1 : Japanese Laid-Open Patent Publication No. 2004 - 280514
Patent Document 2 : Japanese Laid-Open Patent Publication No. 2009 - 116810
Patent Document 3 : Japanese Laid-Open Patent Publication No. 2000 - 347915

### DISCLOSURE OF THE INVENTION

It is possible to use a PDF file by hardly depending on a computer environment. For this reason, the PDF file is utilized widely in companies handling various documents in addition to ordinary homes. In general, there is a tendency that a document to be created in the company has the number of pages increased greatly. For example, in the case in which spreadsheet software is used to create, as an electronic document, a report obtained by analyzing business form data, it is necessary to present a result of analysis performed from various viewpoints and respective results of analysis are usually graphed and presented. For this reason, the number of pages tends to be increased.

However, many people feel that a document having a large number of pages can be seen as a printed matter more easily than a PDF file on a screen. In the PDF file, particularly, it is necessary to carry out page feeding little by little by a scroll operation. For this reason, in the case in which only necessary parts for a reader are to be read here and there from an electronic document, there is a problem in that a greater deal of time and labor is taken for searching and reading the necessary parts as compared with the case of the printed matter.

In some cases in which the business form data analyzing report is presented as the electronic document as described above, moreover, a reader wants to see a result of analysis performed from a further different viewpoint even if the results of the analysis performed from the various viewpoints are presented. However, that cannot be carried out in a PDF file which has already been created. For this reason, it is necessary to ask an original analyst to analyze business form data again and to then add the result, thereby re-creating a PDF file.

In order to lessen the time and labor for re-creating the PDF file, it is necessary to perform whole analysis to be supposed from the beginning, thereby reporting a result thereof as an electronic document. However, it is difficult to actually carry out the work. The reason is that it is hard for an analyst to suppose demands of all readers without omission. Even if the analysis can be performed from the beginning at a close level thereto, there is a problem in that the number of pages of an electronic document to be created is enormous and reading is made harder to perform.

In order to solve the problems, it is an object of the present invention to enable various information desired by a user to be presented through an electronic document without increasing the number of pages of the electronic document and taking a great deal of time and labor for re-creating the electronic document.

In order to attain the object, the present invention incorporates both a program and data into an electronic document in a state in which the program can be executed by using the data, thereby generating an electronic document having a program.

According to the present invention having the structure described above, in the case in which the program is to be executed to process the data from various viewpoints and the respective processing results are to be presented as electronic documents, it is not necessary to generate an electronic document in a state in which all of the respective processing results are output in advance. The reason is as follows. It is possible to execute the program over the electronic document. Therefore, it is sufficient that a user who wants to see a desirable processing result should cause the program to execute the desirable processing. Consequently, it is possible to prevent an increase in the number of pages of the electronic document.

For this reason, in the case in which the user wants to see only necessary information for him (her), it is not necessary to conventionally take a great deal of time and labor for searching a relevant one of an enormous number of pages by a scroll operation. In the case in which the enormous number of pages have no necessary information for the user, moreover, it is not necessary to conventionally ask an original electronic document creator to re-create an electronic document.

As described above, according to the present invention, it is possible to present various information desired by a user through an electronic document without increasing the number of pages of the electronic document and taking a great deal of time and labor for re-creating the electronic document.

### BRIEF DESCRIPTION OF THE DRAWINGS

FIG. 1 is a block diagram showing an example of a structure of an electronic document reading system executing an electronic document generation device according to the present invention.
FIG. 2 is a diagram showing a display image of a PDF file to be generated by an electronic document generating section according to the present embodiment.
FIG. 3 is a diagram showing a display image of a PDF file generated newly by an execution control section according to the present embodiment.
FIG. 4 is a flowchart showing an example of an operation of a server (an electronic document generation device) according to the present embodiment.

### BEST MODE FOR CARRYING OUT THE INVENTION

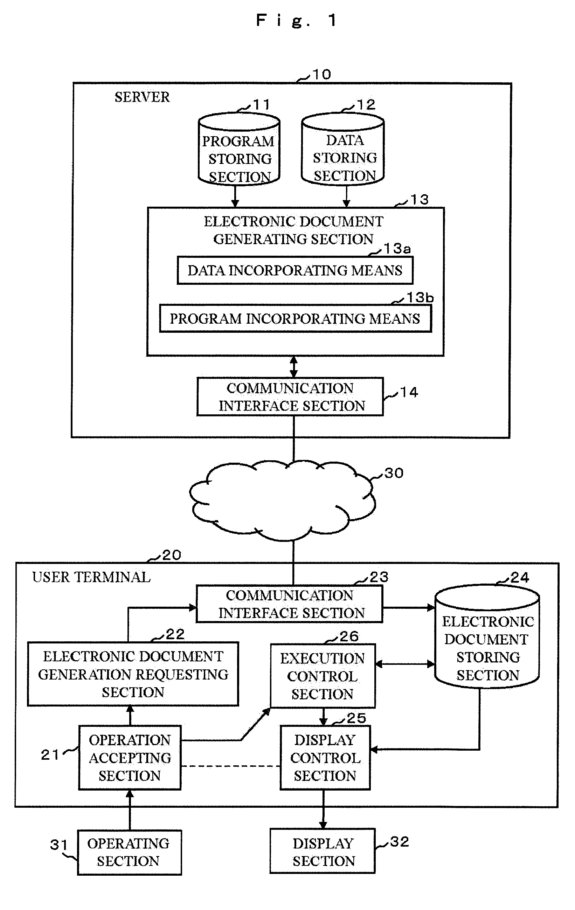

An embodiment according to the present invention will be described below with reference to the drawings. FIG. 1 is a block diagram showing an example of a structure of an electronic document reading system executing an electronic document generation device according to the present invention. As shown in FIG. 1, the electronic document reading system according to the present embodiment includes a server 10 and a user terminal 20 and is configured in such a manner that they can be connected through a communication network 30 such as internet.

The server 10 corresponds to the electronic document generation device according to the present invention and includes, as a functional structure thereof, a program storing section 11, a data storing section 12, an electronic document generating section 13 and a communication interface section 14. The electronic document generating section 13 is configured from data incorporating means 13a and program incorporating means 13b.

Moreover, the user terminal 20 includes, as a functional structure thereof, an operation accepting section 21, an electronic document generation requesting section 22, a communication interface section 23, an electronic document storing section 24, a display control section 25 and an execution control section 26. Furthermore, an operating section 31 configured from a mouse, a keyboard and the like and a display section 32 configured from a display and the like are connected to the user terminal 20.

A function of the electronic document generating section 13 provided in the server 10 actually includes a CPU or an MPU, an RAM, an ROM and the like and can be implemented by an operation of an electronic document generation program stored in the RAM, the ROM, a hard disk or the like.

Accordingly, it is possible to implement the function of the electronic document generating section 13 by recording, in a recording medium such as a CD-ROM, the electronic document generation program to be operated to perform the function of the electronic document generating section 13 by the server 10 and causing the server 10 to read the electronic document generation program. As the recording medium for recording the electronic document generation program, it is possible to use a flexible disk, a hard disk, a magnetic tape, an optical disk, a magneto-optical disk, a DVD, a nonvolatile memory card or the like as well as a CD-ROM. Moreover, the function can also be implemented by downloading the electronic document generation program into the server 10 through a network such as internet.

The communication interface section 14 of the server 10 and the communication interface section 23 of the user terminal 20 execute transfer of various data through the communication network 30 between the server 10 and the user terminal 20.

The program storing section 11 of the server 10 stores a program to be incorporated into an electronic document. Although the program to be incorporated is optional, it is assumed to use a business form processing program capable of executing processing for accumulating business form data, processing for graphing business form data, or the like as an example in the present embodiment. In other words, the business form processing program is stored in the program storing section 11.

The data storing section 12 stores data to be used for executing a program. Since a program to be incorporated is optional, data to be used for executing the program is also optional. Since description will be given on the assumption that the business form processing program is used in the present embodiment, the data to be stored in the data storing section 12 is the business form data.

The electronic document generating section 13 incorporates both the business form processing program stored in the program storing section 11 and the business form data stored in the data storing section 12 into the electronic document in a state in which the business form processing program can be executed by using the business form data , thereby generating an electronic document having a program.

The electronic document having a program to be generated in the present embodiment is configured from a PDF (Portable Document Format) file. The electronic document generating section 13 incorporates both the business form processing program and the business form data into the electronic document by utilizing SWF (Small Web Format) of the PDF file.

The SWF is one of reproducing file formats of Flash (registered trademark) manufactured by Adobe Systems Incorporated. In a computer environment in which "Flash Player" to be plug-in software supplied by the Adobe Systems Incorporated is installed, it is possible to reproduce, on a browser, a movie or the like incorporated in the PDF file by utilizing the SWF. In the present embodiment, the business form processing program and the business form data are incorporated into the PDF file by utilizing a function of the SWF.

The electronic document generating section 13 incorporates the business form data into the PDF file and incorporates, into the PDF file, the business form processing program compiled to enable execution of the processing by using the business form data to be incorporated. The incorporation processing is carried out by the data incorporating means 13a and the program incorporating means 13b.

In other words, the data incorporating means 13a reads the business form data from the data storing section 12 and incorporates the business form data into the PDF file. Moreover, the program incorporating means 13b reads the business form processing program from the program storing section 11 and compiles the business form processing program in order to enable execution of the processing by using the business form data to be incorporated by the data incorporating means 13a, and incorporates the business form processing program thus complied into the PDF file.

The electronic document (PDF file) having a program which is generated by the electronic document generating section 13 as described above is supplied to the communication interface section 14 and is transmitted to the user terminal 20 through the communication network 30.

The operation accepting section 21 of the user terminal 20 accepts various operations of the operating section 31. For example, the operation accepting section 21 accepts an operation for requesting generation of an electronic document (PDF file) to the server 10. Moreover, the operation accepting section 21 accepts an operation for giving an instruction for executing the business form processing program incorporated in a PDF file sent from the server 10 over the PDF file.

When the operation for requesting generation of an electronic document is accepted by the operation accepting section 21, the electronic document generation requesting section 22 generates electronic document generation request data and supplies the electronic document generation request data to the communication interface section 23. The generation request data includes address information about the user terminal 20. The generation request data generated by the electronic document generation requesting section 22 is transmitted to the server 10 through the communication network 30.

In the server 10, the electronic document generating section 13 incorporates the business form processing program and the business form data into the electronic document and thus generates a PDF file when an instruction for generating the electronic document is given based on the generation request data transmitted from the user terminal 20. At this time, the electronic document generating section 13 generates the PDF file in a state in which a processing result obtained by executing specific processing related to the business form processing program by using the business form data is presented onto the electronic document.

When the instruction for generating an electronic document is given, furthermore, the electronic document generating section 13 generates a PDF file in a state in which a user interface for giving an instruction for executing desirable processing related to the business form processing program by a user is presented onto the electronic document together with the processing result obtained by executing the business form processing program.

Specific processing to be performed in the first generation of the PDF file on request can be determined previously and optionally based on the electronic document generation program. When the business form processing program is executed for a purpose other than the generation of the PDF file, alternatively, processing which is being executed can be set to be the specific processing. On the other hand, when the business form processing program is not being executed, processing executed finally can be set to be the specific processing.

If the processing which is being executed in accordance with the business form processing program or the processing executed finally is executed in the generation of the PDF file, there is the following advantage. In other words, the processing result obtained in accordance with the business form processing program is retained in a cache memory or an in-line memory (a memory connected at a high speed to a CPU). Therefore, the electronic document generating section 13 can quickly generate a PDF file in a state in which a processing result is presented onto an electronic document by utilizing data retained in the memory.

In this case, the business form data which is retained in the cache memory or the in-line memory and is to be incorporated into the PDF file together with the business form processing program is data fetched from a database (not shown) on the server 10 and used for accumulation, analysis or the like (the processing executed for the purpose other than the generation of the PDF file) depending on a user operation, for example. In other words, the business form data to be incorporated into the PDF file is not fixed data prepared in advance by the server 10 but is dynamically varied depending on the result of the processing to be performed on the server 10. As a matter of course, the business form data may be fixed data prepared in advance by the server 10. As one of features of the present embodiment, however, the business form data varied dynamically in the cache memory or the in-line memory is incorporated into the PDF file.

As described above, the PDF file generated by the electronic document generating section 13 is transmitted to the user terminal 20 through the communication network 30. At this time, a transmission destination address is specified based on address information included in the generation request data transmitted from the user terminal 20.

The PDF file transmitted from the server 10 to the user terminal 20 is stored in the electronic document storing section 24. The display control section 25 controls the display section 32 to display the PDF file stored in the electronic document storing section 24. The PDF file to be displayed at this time is set in a state in which a processing result obtained by executing the specific processing related to the business form processing program with use of the business form data is presented onto the electronic document.

As described above, if Flash Player is installed in the user terminal 20, display can be carried out in a state in which the processing result obtained in accordance with the business form processing program is presented onto the electronic document of the PDF file even though the same business form processing program as that of the server 10 is not installed in the user terminal 20.

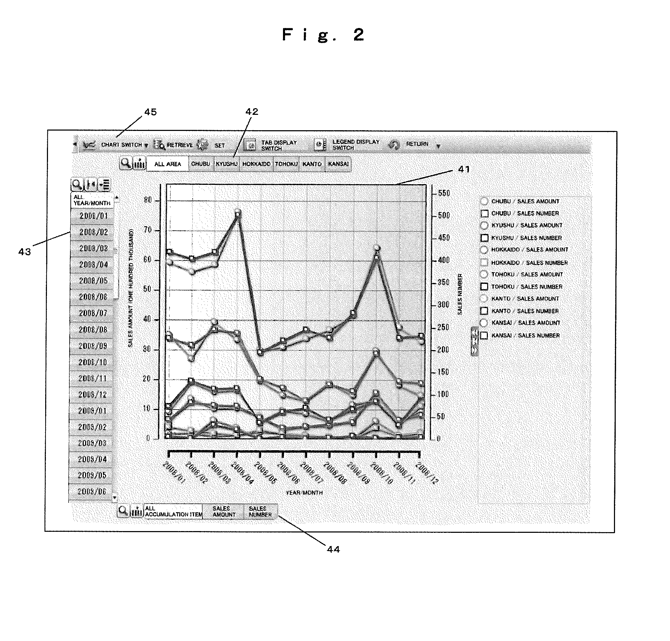

FIG. 2 is a diagram showing a display image of the PDF file. In an example of FIG. 2, there is shown a state in which business form data is used to execute accumulation processing in accordance with the business form processing program and a result of the processing is presented as a line graph 41. Moreover, there is set a state in which user interfaces 42 to 45 for giving an instruction for executing desirable processing related to the business form processing program by a user are presented together with the line graph 41.

In the example shown in FIG. 2, the user interface includes an area changing button 42 for changing an accumulation target area by a user's desire, a year and month changing button 43 for changing an accumulation target year and month by a user' s desire, and an item changing button 44 for changing an accumulation item by a user's desire.

Moreover, the user interface also includes a display switching button 45 for changing a display state of a graph by a user's desire. By operating the display switching button 45, for example, it is possible to switch and display a line graph in another form such as a bar graph or a circle graph or to divide and display a graph every area or year and month.

Returning to FIG. 1, when the operation accepting section 21 accepts an operation for the user interface displayed on the display image of the PDF file, the execution control section 26 controls the execution of the business form processing program corresponding to a type of the operated user interface.

Specifically, the execution control section 26 controls the execution of the business form processing program incorporated in the PDF file stored in the electronic document storing section 24 using the business form data incorporated in the PDF file depending on the operation of the user interface.

The business form processing program is coded to execute the processing corresponding to the operated user interface. For this reason, the execution control section 26 can execute processing in accordance with a business form processing program by simply presenting, to the business form processing program, what the operated user interface is.

Thus, both the business form processing program and the necessary business form data for executing the processing in accordance with the business form processing program are incorporated in the PDF file. Therefore, the execution of the business form processing program through the execution control section 26 is completed in only the user terminal 20. In other words, if the Flash Player is installed in the user terminal 20, the business form processing program incorporated in the PDF file can be executed and it is not necessary to re-create the PDF file by giving access to the server 10 again even though the same business form processing program as that of the server 10 is not installed in the user terminal 20.

When the processing in accordance with the business form processing program is executed by the control of the execution control section 26, a processing result thereof is supplied from the execution control section 26 to the display control section 25. The display control section 25 controls the display section 32 to display the electronic document in a state in which the result of execution of the processing through the execution control section 26 or the user interface is presented.

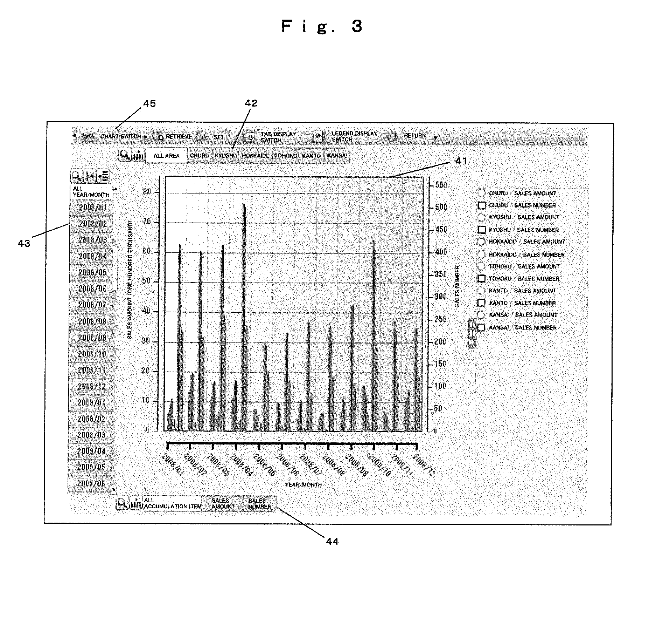

FIG. 3 is a diagram showing a display image of a PDF file generated newly by the execution control section 26. In an example of FIG. 3, there is shown a state in which a line graph is switched into a bar graph and the bar graph is displayed by the operation of the display switching button 45.

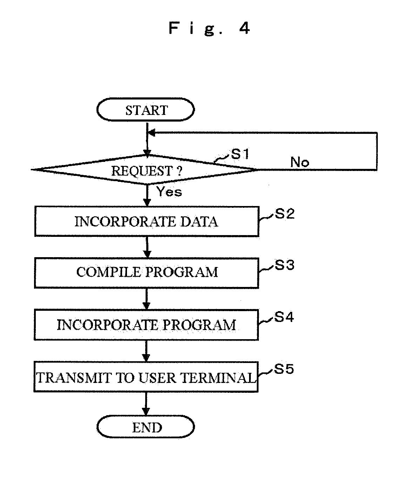

FIG. 4 is a flowchart showing an example of an operation of the server 10 (the electronic document generation device) according to the present embodiment having the structure described above. In FIG. 4, the electronic document generating section 13 decides whether electronic document generation request data is transmitted from the user terminal 20 through the communication interface section 14 or not (Step S1).

If it is decided that the electronic document generation request data is transmitted, the data incorporating means 13a of the electronic document generating section 13 reads business form data from the data storing section 12 and incorporates the business form data into a PDF file (Step S2).

Moreover, the program incorporating means 13b reads a business form processing program from the program storing section 11 and the business form processing program is compiled to enable the execution of the processing by using the business form data to be incorporated by the data incorporating means 13a (Step S3). Then, the complied business form processing program is incorporated into the PDF file (Step S4).

When a PDF file is generated by the incorporation of the business form data and the business form processing program, the electronic document generating section 13 transmits the PDF file to the user terminal 20 through the communication interface section 14 (Step S5). Consequently, the processing of the flowchart shown in FIG. 4 is ended.

As described above in detail, in the present embodiment, both the business form processing program and the business form data are incorporated into the electronic document in a state in which the business form processing program can be executed by using the business form data, thereby generating an electronic document (PDF file) having a program.

According to the present embodiment thus configured, in the case in which the business form processing program is to be executed to process the business form data from various viewpoints and respective processing results are to be presented as electronic documents, it is not necessary to generate a PDF file in a state in which all of the respective processing results are output in advance. The reason is as follows. It is possible to execute the business form processing program by utilizing the function of the Flash Player on the PDF file. Therefore, it is sufficient that a user who wants to see a desirable processing result should operate a user interface displayed on a display image of the PDF file to cause the business form processing program to execute the desirable processing. Consequently, it is possible to prevent an increase in the number of pages of the electronic document to be generated as the PDF file.

For this reason, in the case in which the user wants to see only necessary information for him (her), it is not necessary to conventionally take a great deal of time and labor for searching a relevant one of an enormous number of pages by a scroll operation. In the case in which the enormous number of pages have no necessary information for the user, moreover, it is not necessary to conventionally ask an original electronic document creator to re-create an electronic document.

As described above, according to the present embodiment, it is possible to present various information desired by a user through an electronic document without increasing the number of pages of the electronic document and taking a great deal of time and labor for re-creating the electronic document.

Although the description has been given to the example in which the server 10 includes the program storing section 11, the data storing section 12 and the electronic document generating section 13 and a PDF file is generated in the server 10 on request given from the user terminal 20 in the embodiment, the present invention is not restricted thereto.

For example, the user terminal 20 may include the program storing section 11, the data storing section 12 and the electronic document generating section 13 and a PDF file may be generated in the user terminal 20. In this case, an electronic document generation program is installed in the user terminal 20.

If the user terminal 20 includes the program storing section 11 and the business form processing program is installed in the user terminal 20, it is not necessary to take the time in order to create the PDF file for reading in the user terminal 20. If the PDF file generated in the user terminal 20 is distributed to another user terminal (not shown), however, it is possible to read a processing result obtained by a business form processing program or to execute processing in accordance with the business form processing program also in other user terminals in which the business form processing program is not installed.

Although the description has been given by taking the business form processing program as an example of the program to be stored in the program storing section 11 and taking the business form data as an example of the data to be stored in the data storing section 12 in the embodiment, moreover, the present invention is not restricted thereto. A program and data required for executing the program which are to be used can be optional.

Although the description has been given by taking the PDF file as an example of the electronic document in the embodiment, moreover, the present invention is not restricted thereto. In other words, it is possible to use a file format other than the PDF file if the format can incorporate a program or data into a file. As an example, a format such as HTML5 or MHTML (MIME Encapsulation of Aggregate HTML) can be taken.

In addition, the embodiment is only illustrative for concreteness to carry out the present invention and the technical scope of the present invention should not be thereby construed to be restrictive. In other words, the present invention can be carried out in various configurations without departing from the gist or main features thereof.

## Claims

1. An electronic document generation device comprising:
a program storing section for storing a program to be incorporated into an electronic document;
a data storing section for storing data to be used for executing the program; and
an electronic document generating section for incorporating both the program and the data into the electronic document in a state in which the program can be executed by using the data , thereby generating an electronic document having a program.

2. The electronic document generation device according to claim 1, wherein when an instruction for generating the electronic document having a program is given, the electronic document generating section incorporates both the program and the data into the electronic document in a state in which a processing result obtained by executing the program by using the data is presented onto the electronic document.

3. The electronic document generation device according to claim 2, wherein when an instruction for generating the electronic document having a program is given, the electronic document generating section incorporates both the program and the data into the electronic document in a state in which a user interface for giving an instruction for executing desirable processing related to the program by a user is presented onto the electronic document together with the processing result obtained by executing the program.

4. The electronic document generation device according to claim 1, wherein the electronic document is configured from a PDF (Portable Document Format) file and the electronic document generating section incorporates both the program and the data into the electronic document by utilizing SWF (Small Web Format) of the PDF file.

5. The electronic document generation device according to claim 1, wherein the electronic document generating section incorporates the data into the electronic document and incorporates, into the electronic document, the program complied to enable execution of processing by using the data to be incorporated.

6. An electronic document generation program for causing a computer to function to generate an electronic document having a program, the electronic document generation program comprising:
data incorporating means for reading data to be used for executing a program to be incorporated into an electronic document from a data storing section and incorporating the data into the electronic document; and
program incorporating means for reading the program from a program storing section, and compiling the program and incorporating the compiled program into the electronic document in order to enable execution of processing by using the data to be incorporated by the data incorporating means,
wherein both the program and the data are incorporated into the electronic document in a state in which the program can be executed by using the data.

7. The electronic document generation program according to claim 6, wherein when an instruction for generating the electronic document having a program is given, the program incorporating means incorporates the program into the electronic document in a state in which a processing result obtained by executing the program by using the data is presented onto the electronic document.

8. The electronic document generation program according to claim 7, wherein when an instruction for generating the electronic document having a program is given, the program incorporating means incorporates the program into the electronic document in a state in which a user interface for giving an instruction for executing desirable processing related to the program by a user is presented onto the electronic document together with the processing result obtained by executing the program.
